# EUROPÄISCHE PATENTSCHRIFT

(11) **EP 0 709 171 B1**
(45) Veröffentlichungstag und Bekanntmachung des Hinweises auf die Patenterteilung: **25.02.1998**
(21) Anmeldenummer: 95116626.3
(22) Anmeldetag: 21.10.1995
(51) Int. Cl.: B26D 7/08, B26F 1/38

(54) **Verfahren und Vorrichtung zum Ausstanzen von Kunststoffkarten aus einer Substrat-Laminatbahn**
Method and apparatus for stamping out plastic cards from a laminated substrate in web form
Méthode et dispositif pour l'estampage de cartes en matière plastique à partir d'une nappe de matériau laminé subjacent

(30) Priorität: 26.10.1994 DE 4438258
(43) Veröffentlichungstag der Anmeldung: 01.05.1996
(73) Patentinhaber: MELZER MASCHINENBAU GmbH, D-58332 Schwelm (DE)
(72) Erfinder: Melzer, Arndt, D-58332 Schwelm (DE)
(74) Vertreter: Sparing Röhl Henseler Patentanwälte

(56) Entgegenhaltungen:
- DE-A- 4 236 152
- FR-A- 1 563 522

## Beschreibung

Die Erfindung betrifft ein Verfahren zum Ausstanzen von Kunststoffkarten aus einer Substrat-Laminatbahn.

Kunststoffkarten, wie Kreditkarten, Scheckkarten, Telefonkarten und dergleichen werden so hergestellt, daß eine bedruckte Folie zwischen mindestens eine rückseitige Folie und eine Deckfolie einlaminiert wird. Aus dieser Substrat-Laminatbahn werden die Karten ausgestanzt, und ein Stanzgitter bleibt als Abfall zurück.

Bisher wurden Polyvinylchloridfolien verwendet, deren Entsorgung ökologisch kritisch ist. Deshalb geht man dazu über, anstelle von PVC Polycarbonat zu verwenden, das zwar ökologisch weniger bedenklich ist, jedoch schlechter stanzbar ist; an den ausgestanzten Karten sind die Schnittkanten rauh.

Aufgabe der Erfindung ist es, das Ausstanzen der Karten so zu modifizieren, daß die Schnittkanten glatt werden.

Die erfindungsgemäße Lösung dieser Aufgabe ist im Patentanspruch 1 bzw. im Patentanspruch 4 definiert. Der Erfindung liegt die Beobachtung zugrunde, daß die Rauhigkeit beim Stanzen von Polycarbonat dadurch bedingt ist, daß ein Stanzgitterabschnitt zwischen zwei parallelen Kanten zweier benachbarter Karten nicht ausweichen kann.

Die Schwächung dieses stegförmigen Stanzgitterabschnitts erfolgt am einfachsten durch Ausstanzen eines zu den Kartenkanten parallelen Streifens, wobei man das entsprechende Stanzwerkzeug mit dem eigentlichen Kartenausstanzwerkzeug kombinieren kann. Es versteht sich aber, daß jede andere Methode, den Steg zu schwächen, gleiche Ergebnisse erbringt; so könnte man beispielsweise eine Rille einfräsen. Das Ausstanzen von Streifen ist jedoch bevorzugt, weil die ausgestanzten Abfälle leichter zu beseitigen sind als beispielsweise Frässpäne mit hohem Staubanteil.

Die Breite des ausgetrennten Streifens soll möglichst groß sein, doch darf die Integrität der Bahn nicht gefährdet werden. Es hat sich gezeigt, daß der Streifen etwas breiter sein kann als die Bahndicke beträgt. Bei einer Bahndicke von 0,8 Millimeter hat sich eine Streifenbreite von 1 Millimeter bewährt.

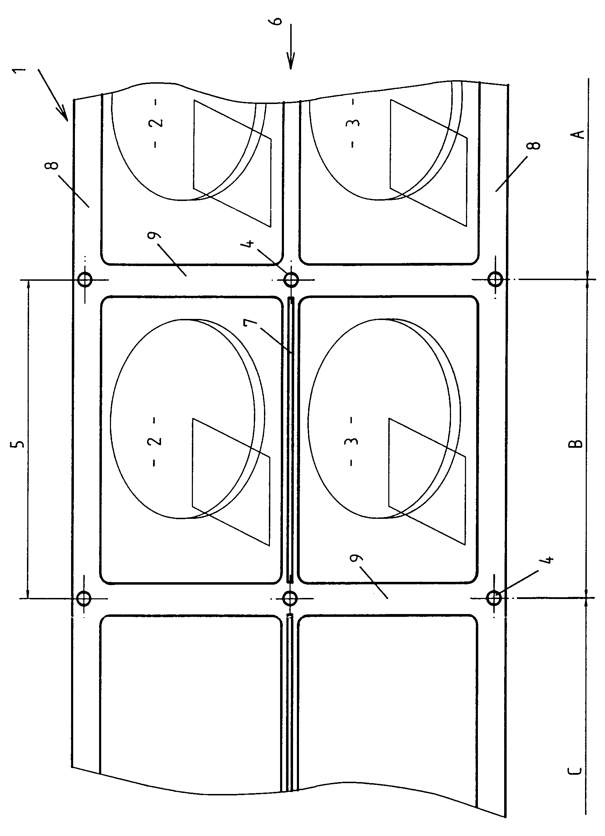

Die beigefügte Zeichnung stellt eine Draufsicht auf eine Substrat-Laminatbahn 1 dar, in der jeweils zwei Karten 2 und 3 nebeneinander liegen. Die Bahn ist mit runden Löchern 4 versehen, die mit (nicht dargestellten) Stiften zusammenwirken, um die Bahn registerhaltig auszufluchten, wenn sie um jeweils einen Lochabstand 5 in Richtung des Pfeiles 6 transportiert wird. In der Zeichnung sind drei Stationen dargestellt: Die Station A ist der Auslauf aus einer Laminieranlage (nicht gezeigt). In Station B wird der Streifen 7 ausgestanzt, und in Station C werden die Karten 2 und 3 unter Hinterlassung des Stanzgitters ausgestanzt. Die Stanzwerkzeuge für die Stationen B und C sind vorteilhafterweise zu einem einzigen Stanzwerkzeug zusammengefaßt und werden von derselben Presse betätigt.

Man erkennt, daß in den Stanzgitterstegen an den äußeren Rändern keine Streifen ausgestanzt werden, da diese Stege 8 ohne weiteres ausweichen können. Dagegen ist es gegebenenfalls zweckmäßig, auch die Querstege 9 zu schwächen.

Liegen in einer Bahn mehr als zwei Karten nebeneinander, so werden jeweils die Stege zwischen ihnen geschwächt, um rauhe Kanten zu vermeiden.

## Patentansprüche

1. Verfahren zum Ausstanzen von Kunststoffkarten (2, 3), insbesondere solchen aus Polycarbonat, aus einer Substrat/Laminatbahn (1), **dadurch gekennzeichnet**, daß vor dem Ausstanzen der Karten zwischen benachbarten Karten (2, 3) verlaufende Stege des Stanzgitters durch Materialentfernung von geschwächt werden.

2. Verfahren nach Anspruch 1, dadurch gekennzeichnet, daß die Stege durch Ausstanzen eines Streifens (7), der parallel zu Kanten benachbarter Karten (2, 3) verläuft, geschwächt werden.

3. Verfahren nach Anspruch 2, dadurch gekennzeichnet, daß die Breite des ausgestanzten Streifens (7) größer bemessen wird als die Dicke der Substrat/Laminatbahn (1).

4. Vorrichtung zum Ausstanzen von Kunststoffkarten (2, 3) aus einer Substrat/Laminatbahn (1) mit einer Presse und einem von der Presse betätigbaren Kartenausstanzwerkzeug, dadurch gekennzeichnet, daß zur Durchführung des Verfahrens nach Anspruch 2 ein mit dem Kartenausstanzwerkzeug zu einem einzigen Werkzeug kombiniertes Streifenausstanzwerkzeug vorgesehen ist.

## Claims

1. Method for punching plastic cards (2, 3), in particular those made of poly carbonate, from a substrate/laminate web (1), characterized in that prior to card punching straps of the punch grid extending between adjacent cards (2, 3) are weakened by removal of material.

2. Method as in claim 1, characterized in that the straps are weakened by punching a strip (7) extending in parallel to edges of adjacent cards (2, 3).

3. Method as in claim 2, characterized in that the width of the punched strip (7) is dimensioned larger than the thickness of the substrate/laminate web (1).

4. Apparatus for punching plastic cards (2, 3) from a substrate/laminate web (1), comprising a punch press and a punch die actuated by the press, characterized in that for performing the method of claim 2 a strip punching die is combined with a card punching die to form a single die.

## Revendications

1. Procédé d'étampage de cartes en matière synthétique (2, 3), en particulier de telles cartes en polycarbonate, à partir d'une feuille laminée/feuille d'un substrat (1), caractérisé en ce que préalablement à l'étampage des cartes, les poutres de la grille d'étampage s'étendant entre des cartes voisines (2, 3) sont affaiblies par enlèvement de matière.

2. Procédé selon la revendication 1, caractérisé en ce que les poutres sont affaiblies par étampage d'une bande (7) qui s'étend parallèlement aux arêtes de cartes voisines (2, 3).

3. Procédé selon la revendication 2, caractérisé en ce que la largeur des bandes étampées (7) est dimensionnée pour être plus grande que l'épaisseur de la feuille laminée/feuille d'un substrat (1).

4. Dispositif pour étamper des cartes en matière synthétique (2, 3) à partir d'une feuille laminée/feuille d'un substrat (1) à l'aide d'une presse, et d'un outil d'étampage de carte actionnés par la presse caractérisé en ce que, pour la mise en oeuvre du procédé selon la revendication 2, il est prévu un outil d'étampage de bande combiné à l'outil d'étampage de carte en un seul outil.
